# EUROPÄISCHE PATENTSCHRIFT

(11) **EP 3 236 285 B1**
(45) Veröffentlichungstag und Bekanntmachung des Hinweises auf die Patenterteilung: **19.12.2018**
(21) Anmeldenummer: 17162805.0
(22) Anmeldetag: 24.03.2017
(51) Int. Cl.: G02B 5/08, G01S 17/08, G01S 17/48, G01S 7/481, B29D 11/00, G01S 17/02, G01V 8/14

(54) **OPTOELEKTRONISCHER SENSOR**
OPTOELECTRONIC SENSOR
CAPTEUR OPTOÉLECTRONIQUE

(30) Priorität: 18.04.2016 DE 102016107153
(43) Veröffentlichungstag der Anmeldung: 25.10.2017
(73) Patentinhaber: Sick AG, 79183 Waldkirch (DE)
(72) Erfinder: Yltchev-Edelmann, Georgy, 79194 Gundelfingen (DE)

(56) Entgegenhaltungen:
- WO-A2-2006/060081
- DE-A1-102005 013 317
- DE-U1-202009 007 612
- DE-U1-202011 052 365
- JP-A- 2006 265 050
- JP-A- 2012 113 146
- US-A1- 2010 105 980
- US-A1- 2013 139 964

## Beschreibung

Die vorliegende Erfindung betrifft einen optoelektronischen Sensor nach dem Oberbegriff von Anspruch 1.

Für den Einsatz in optoelektronischen Sensoren werden sogenannte Optikträger aus Polymerwerkstoffen eingesetzt. Durch bekannte Spritzgussverfahren lässt sich eine komplexe Optikträgergeometrie günstig herstellen. Problematisch dabei sind die Toleranzen und eine Präzision des Optikträgers. Weiter problematisch ist eine Festigkeit des Optikträgers, eine Temperaturabhängigkeit, sowie aufwändige Prozesse, um spiegelnde Oberflächen auf dem Kunststoffteil herzustellen. Zusätzlich sind häufig leitfähige Schirmbleche erforderlich, um eine elektromagnetische Verträglichkeit (EMV) sicherzustellen.

Die DE 20 2009 007 612 U1 offenbart eine Reflexionslichtschranke mit einem Umlenkspiegel.

Die WO 2006/060081 A2 offenbart einen metallischen Spiegel aus amorphem Metall.

Die US 2010/0105980 A1 offenbart ein Endoskop mit einem motorisch betriebenen Spiegelelement aus amorphem Metall.

Die JP 2012-113146 A offenbart einen Schwingspiegel aus metallischem Glas.

Die DE 20 2011 052 365 U1 offenbart eine Reflexionslichtschranke mit einem Strahlteiler und einem Lichtleiter als Lichtumlenkmittel.

Die DE 10 2005 013 317 A1 offenbart einen optischen Sensor mit einem Umlenkspiegel.

Die JP 2006 265050 A offenbart eine Spritzgussvorrichtung für amorphe Metalle.

Die US 2013/0139964 A1 offenbart Spiegel aus amorphem Metall.

Eine Aufgabe der Erfindung besteht darin, ein Spiegelelement für einen optoelektronischen Sensor bereitzustellen, welches kostengünstig ist und eine hohe Oberflächengüte aufweist. Weiter soll das Spiegelelement niedrige Toleranzen aufweisen und einen niedrigen Temperaturausdehnungskoeffizienten aufweisen.

Die Aufgabe wird gemäß Anspruch 1 gelöst durch einen optoelektronischen Sensor zur Erkennung von Objekten innerhalb eines Überwachungsbereichs, mit einer Sendereinheit mit einem Sendeelement zur Aussendung von Sendelichtstrahlen in den Überwachungsbereich, und/oder einer Empfängereinheit mit einem Empfangselement zum Empfang von Empfangslichtstrahlen des Objektes, wobei die Empfängereinheit und/oder die Sendereinheit mindestens ein Spiegelelement aufweist zur Umlenkung der Lichtstrahlen, wobei das Spiegelelement aus amorphem Metall gebildet ist.

Amorphe Metalle bzw. amorphe Metallwerkstoffe, welche auch als metallische Gläser bezeichnet werden, weisen aufgrund ihrer nicht kristallinen Struktur im Vergleich zu Stahl eine elektrische Leitfähigkeit auf, die jedoch geringer ist als bei Stahl. Zusätzlich sind die Festigkeit und die Härte von amorphen Metallen im Vergleich zu kristallinen Metallen erhöht. Diese erhöhte Festigkeit ermöglicht es, dünnere Flächen auszubilden bei gleicher Festigkeit. Dadurch kann das Spiegelelement dünnwandig ausgebildet werden.

Ein weiterer Vorteil der Erfindung besteht darin, dass amorphe Metalle vergleichsweise geringe Schrumpfraten aufweisen und daher werkzeuggebunden mittels spritzgussähnlicher Verfahren hergestellt werden können. Dies ermöglicht eine besonders schnelle und kostengünstige Fertigung des Spiegelelements und damit des optoelektronischen Sensors.

Das Spiegelelement ist beispielsweise vollständig durch ein spritzgussähnliches Verfahren hergestellt. Demgemäß ist das Spiegelelement als Spritzgussbauteil ausgeführt. Dies ermöglicht eine besonders einfache und kostengünstige Herstellung. Bei kristallinen Metallen wäre eine Herstellung mittels Spritzguss aufgrund der hohen Schrumpfraten nachteilig.

Durch die Verwendung von amorphem Metall weist das Spiegelelement niedrige Toleranzwerte auf, wodurch das Spiegelelement mit einer hohen Präzision gefertigt werden kann.

Weiter kann die Oberflächengüte des Spiegelelements sehr hoch ausgeführt sein. Insbesondere kann bereits durch das Spritzgussbauteil ohne Nachbearbeitung eine hohe Oberflächengüte der Spiegeloberfläche bzw. des Spiegels hergestellt bzw. bereitgestellt werden, da die Oberflächengüte des Spritzlings bereits selbst eine hohe Oberflächengüte aufweist. Dadurch ist das Spiegelelement ebenfalls preiswert herstellbar.

Weiter weist das amorphe Metall einen niedrigen Temperaturausdehnungskoeffizienten auf. Dadurch ändern sich die optischen Eigenschaften des Spiegelelements bei Temperaturänderungen nur wenig. Dadurch wird ein optoelektronischer Sensor gebildet mit gleichbleibenden optischen Eigenschaften bei einer Temperaturänderung.

Bei dem optoelektronischen Sensor handelt es sich bevorzugt um eine Lichtschranke, eine Reflexionslichtschranke oder einen Lichttaster. Eine Lichtschranke kann dabei als Einweglichtschranke ausgebildet sein. Dabei sind Lichtsender und Lichtempfänger gegenüberliegend angeordnet und eine Unterbrechung des Lichtstrahls führt in der Auswerteeinheit des Lichtempfängers zu einem Objektfeststellungssignal. Bei einer Reflexionslichtschranke sind Lichtsender bzw. Sendereinheit und Lichtempfänger bzw. Empfängereinheit auf der gleichen Seite eines Überwachungsbereiches, meist in einem einzigen Gehäuse untergebracht. Gegenüberliegend ist ein Retroreflektor angeordnet, der das vom Lichtsender ausgesandte Licht um 180° zurückreflektiert in den Lichtempfänger.

Bei einem Lichttaster sind Lichtsender bzw. Sendereinheit und Lichtempfänger bzw. Empfängereinheit in einem gemeinsamen Gehäuse angeordnet. Die vom Lichtsender ausgesandten Lichtstrahlen werden an einem Objekt reflektiert oder remittiert. Dabei kann das empfangene Licht energetisch ausgewertet werden. Falls ein bestimmter Schwellwert überschritten wird, wird ein Objektfeststellungssignal ausgegeben.

Jedoch kann der Lichttaster auch als Triangulationstaster ausgebildet sein. Bei einem Triangulationstaster ist das Empfangselement ortsauflösend ausgebildet und der Lichtsender beabstandet zum Empfangselement angeordnet. Ein vom Lichtsender ausgesendeter Lichtspot wird von einem Objekt zurück, über die Empfangslinse auf das ortsauflösende Empfangselement abgebildet. Je nach Entfernung des Objektes wird der Lichtspot an unterschiedlichen Positionen abgebildet, wobei von der Position des Lichtspots auf dem Empfangselement auf die Entfernung des Objektes geschlossen werden kann.

Ein Sensor kann auch ein Sensor nach dem Lichtlaufzeitverfahren sein. Dabei wird vom Lichtsender ein kurzer Lichtimpuls bzw. eine Gruppe von Lichtimpulsen ausgesendet. Der oder die Lichtimpulse werden von einem Objekt reflektiert bzw. remittiert und vom Empfangselement des Lichtempfängers empfangen. Von einer nachgeordneten Auswerteeinheit wird die Laufzeit des Lichtes vom Aussenden bis zum Empfangen ausgewertet und daraus die Entfernung des Objektes berechnet.

In Weiterbildung der Erfindung ist das amorphe Metall eine amorphe Metalllegierung.

Solche amorphen Metalllegierungen sind in unterschiedlichen Ausführungen erhältlich und im Vergleich zu alternativen kristallinen Metallen wie Titan relativ preiswert. Die Art der Legierung kann auf die jeweilige Anwendung zugeschnitten sein.

Gemäß der Erfindung wird ein definiertes elektrisches Potential mit dem Spiegelelement verbunden. Dadurch wird die elektromagnetische Verträglichkeit des optoelektronischen Sensors deutlich verbessert, da das Spiegelelement selbst als abschirmende Komponente dient. Das definierte elektrische Potential des Sensors ist ein elektrisches Potential, das mit der Elektronikkarte des Sensors verbunden ist. Das elektrische Potential ist beispielsweise von der Elektronikkarte über einen leitfähigen bzw. metallischen Kontakt oder einen metallischen Stift mit dem Spiegelelement verbunden. Durch den leitfähigen Kontakt wird beim Montieren des Spiegelelements eine elektrische Verbindung zwischen dem Spiegelelement und der Elektronikkarte hergestellt. Dadurch wird die elektromagnetische Verträglichkeit des optoelektronischen Sensors verbessert.

In einer Weiterbildung der Erfindung ist der Spiegel des Spiegelelements konkav gekrümmt. Der Spiegel ist somit nach innen gewölbt, wodurch ein Hohlspiegel gebildet ist. Dadurch können beispielsweise auf den Spiegel fallende Lichtstrahlen durch den Spiegel gebündelt bzw. fokussiert werden. Dadurch kann beispielsweise eine zusätzliche optische Komponente, wie z. B. eine Linse, eingespart werden.

In Weiterbildung der Erfindung ist der Spiegel des Spiegelelements plan ausgebildet. Ein planer bzw. ebener oder flacher Spiegel reflektiert das Licht an jeder Stelle identisch bei parallel einfallenden Lichtstrahlen. Jedoch kann auch ein planer Spiegel fokussierend wirken, wenn bereits die einfallenden Lichtstrahlen konvergierend sind.

In Weiterbildung der Erfindung ist das Spiegelelement in einem Spiegelträger angeordnet, wobei das Spiegelelement und der Spiegelträger einstückig ausgebildet sind und aus amorphem Metall bestehen.

Der Spiegelträger bildet beispielsweise einen Rahmen für das Spiegelelement, wodurch das Spiegelelement mechanisch stabiler ausgeführt ist. Dadurch ist eine besonders einfache, robuste und stabile Ausführung gewährleistet.

Der Spiegelträger weist beispielsweise zusätzliche Seitenwände auf. Weiter dient der Spiegelträger als Befestigungsbasis für weitere Sensorkomponenten. Beispielsweise kann an dem Spiegelträger eine Anschlusseinheit befestigt werden. Der Spiegelträger weist beispielsweise Befestigungsaufnahmen für ein Sensorgehäuse auf. Weiter kann der Spiegelträger Referenzflächen zur Positionierung anderer Sensorkomponenten aufweisen. Weiter kann der Spiegelträger Referenzflächen aufweisen, um den Spiegelträger und damit das Spiegelelement selbst gegenüber einer anderen Referenzfläche genau zu positionieren, um eine exakte Ausrichtung des Spiegelelements zu gewährleisten.

In einer Ausführung der Erfindung weist der Spiegelträger eine komplexe Struktur auf. Diese komplexe Struktur kann zur Befestigung dienen und kann an die Form anderer benachbarter Bauteile angepasst sein, so dass ein möglichst kompakter Sensor gebildet wird.

In einer bevorzugten Ausführungsform sind mindestens zwei Spiegelelemente und der Spiegelträger einstückig ausgebildet. Dadurch können beispielsweise empfangene Lichtstrahlen durch die nacheinander angeordneten Spiegelelemente zweifach abgelenkt werden, um diese beispielsweise einem Empfangselement zuzuführen. Hierbei können die jeweiligen Spiegelelemente auch unterschiedlich ausgebildet sein. Beispielsweise kann ein erstes Spiegelelement konkav ausgebildet sein und ein zweites Spiegelelement plan ausgebildet sein. Jedoch kann es auch vorgesehen sein, dass mehrere Spiegelelemente für jeweils mehrere Sendeeinheiten oder für jeweils mehrere Empfangseinheiten vorgesehen sind.

In Weiterbildung der Erfindung weist mindestens ein Spiegelelement eine Öffnung für die Sendelichtstrahlen auf. Dadurch kann beispielsweis in das Spiegelelement für die Empfängereinheit die Sendereinheit mit dem Sendeelement integriert werden, wodurch ein kompakter Sensor entsteht. Insbesondere können die Sendelichtstrahlen und die Empfangslichtstrahlen kollimiert verlaufen. Bei der Öffnung handelt es sich bevorzugt um eine runde Öffnung bzw. ein Loch, welches beispielsweise nahe der Mitte oder mittig in dem Spiegelelement angeordnet ist.

In einer Ausführung ist das Spiegelelement oder der Spiegelträger mit einer Leiterplatte mechanisch verbunden. Dadurch kann der Sensor sehr einfach aufgebaut sein. Beispielsweise sind auf der Leiterplatte alle elektronischen Komponenten angeordnet und an dem Spiegelträger alle optischen Komponenten angeordnet. Dadurch wird durch die mechanische Verbindung des Spiegelträgers mit der Leiterplatte der Sensor nahezu komplett aufgebaut. Lediglich ein optionaler elektrischer Anschluss und das Sensorgehäuse müssen noch ergänzt werden, um einen einsatzfähigen optoelektronischen Sensor zu erhalten. Beispielsweise ist das Sendeelement und/oder das Empfangselement und eine Auswerteeinheit auf der Leiterplatte angeordnet. Die Leiterplatte weist optional mindestens eine Referenzfläche auf, die mit mindestens einer optionalen Referenzfläche des Spiegelträgers verbunden wird. Durch wird das Sendelement und/oder das Empfangselement zu dem Spiegelelement ausgerichtet und referenziert.

In einer bevorzugten Ausführung weist der Spiegelträger mindestens eine Aufnahme für mindestens ein optisches Element auf. Das optische Element kann beispielsweise mindestens ein refraktives Element, beispielsweise mindestens eine Linse, beispielsweise ein Objektiv, beispielsweise mindestens ein diffraktives Element oder beispielsweise mindestens ein Lichtleitelement, wie beispielsweise mindestens ein Lichtleiter sein. Der Spiegelträger weist wiederum Referenzflächen auf für das optische Element.

In Weiterbildung der Erfindung ist das optische Element eine Sammellinse. Dadurch kann vorteilhaft ein Sendelichtstrahl oder ein Empfangslichtstrahl gebündelt werden, wodurch der Sensor eine höhere Reichweite bzw. eine höhere Empfindlichkeit aufweist.

In einer bevorzugten Ausführungsform der Erfindung weist der Spiegelträger zusätzlich zu dem Spiegelelement mindestens eine Fläche auf, die einstückig zu dem Spiegelträger ausgebildet ist, um eine EMV-Schirmfläche zu bilden. Beispielsweise können mehrere Flächen vorgesehen sein, die die Elektronik der Leiterplatte umschließen, so dass die Elektronik der Leiterplatte abgeschirmt wird, wodurch der Sensor eine bessere elektromagnetische Verträglichkeit aufweist. Beispielsweise ist der Sensor gegenüber störenden fremden elektromagnetischen Wellen besser geschützt.

In Weiterbildung der Erfindung ist das Spiegelelement automatisiert auf einer Leiterplatte bestückt. Dadurch kann eine gesamte Sensoreinheit bestehend aus mindestens einer bestückten Leiterplatte und dem Spiegelelement automatisiert hergestellt werden. Dadurch ist der Sensor sehr kostengünstig herstellbar.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen optoelektronischen Sensor mit Gehäuse;
- Figur 2: einen optoelektronischen Sensor mit einer Leiterplatte und einem Spiegelträger;
- Figur 3: den optoelektronischen Sensor aus Figur 2 in einer Schnittdarstellung.

In den nachfolgenden Figuren sind identische Teile mit identischen Bezugszeichen versehen.

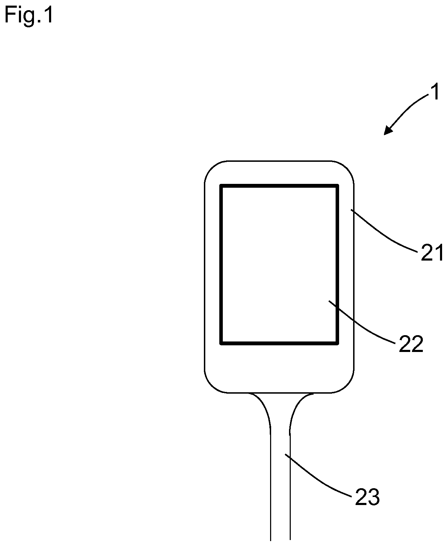

Figur 1 zeigt einen optoelektronischen Sensor 1 mit einem Gehäuse 21, einer Frontscheibe 22 und einem elektrischen Anschluss 23.

Bei dem optoelektronischen Sensor 1 handelt es sich bevorzugt um eine Lichtschranke, eine Reflexionslichtschranke, einen Lichttaster, oder einen Distanzsensor. Bei einer Reflexionslichtschranke sind Lichtsender bzw. Sendereinheit und Lichtempfänger bzw. Empfängereinheit auf der gleichen Seite eines Überwachungsbereiches, meist in einem einzigen Gehäuse untergebracht. Gegenüberliegend ist ein Retroreflektor angeordnet, der das vom Lichtsender ausgesandte Licht um 180° zurückreflektiert in den Lichtempfänger.

Bei einem Lichttaster sind Lichtsender bzw. Sendereinheit und Lichtempfänger bzw. Empfängereinheit in einem gemeinsamen Gehäuse angeordnet. Die vom Lichtsender ausgesandten Lichtstrahlen werden an einem Objekt reflektiert oder remittiert.

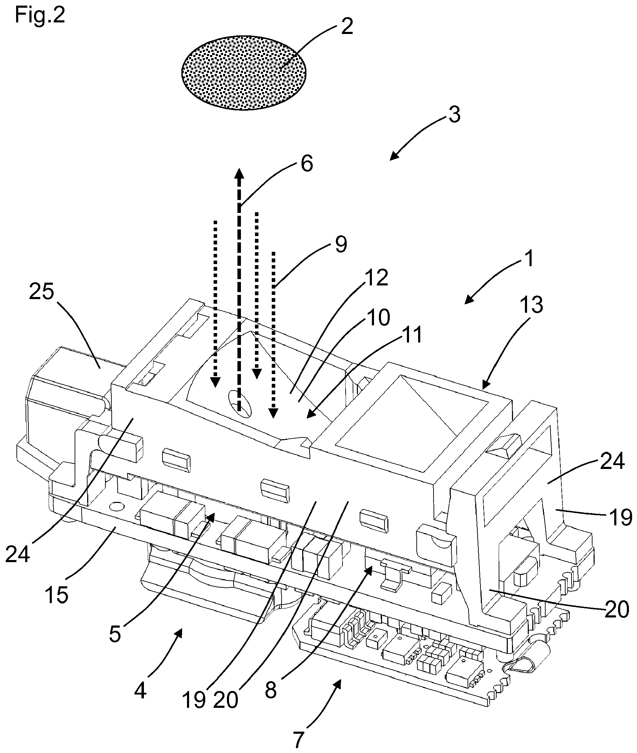

Figur 2 zeigt den inneren Aufbau des optoelektronischen Sensors 1 ohne Gehäuse. Figur 2 zeigt einen optoelektronischen Sensor 1 zur Erkennung von Objekten 2 innerhalb eines Überwachungsbereichs 3, mit einer Sendereinheit 4 mit einem Sendeelement 5 zur Aussendung von Sendelichtstrahlen 6 in den Überwachungsbereich 3, und einer Empfängereinheit 7 mit einem Empfangselement 8 zum Empfang von Empfangslichtstrahlen 9 des Objektes 2, wobei die Empfängereinheit 7 mindestens ein Spiegelelement 10 aufweist zur Umlenkung der Empfangslichtstrahlen 9, wobei das Spiegelelement 10 aus amorphem Metall 11 gebildet ist.

Das Spiegelelement 10 ist beispielsweise vollständig durch ein spritzgussähnliches Verfahren hergestellt. Insbesondere kann bereits durch das Spritzgussbauteil ohne Nachbearbeitung eine hohe Oberflächengüte der Spiegeloberfläche bzw. des Spiegels 12 hergestellt bzw. bereitgestellt werden. Gemäß Figur 2 ist das amorphe Metall 11 eine amorphe Metalllegierung.

Gemäß Figur 2 ist ein definiertes elektrisches Potential mit dem Spiegelelement 10 verbunden. Das definierte elektrische Potential des optoelektronischen Sensors 1 ist ein elektrisches Potential, das mit der Leiterplatte 15 bzw. Elektronikkarte des optoelektronischen Sensors 1 verbunden ist. Das elektrische Potential ist beispielsweise von der Leiterplatte 15 über einen leitfähigen bzw. metallischen Kontakt oder einen metallischen Stift mit dem Spiegelelement verbunden.

Gemäß Figur 2 ist der Spiegel 12 des Spiegelelements 10 konkav gekrümmt. Der Spiegel 12 ist somit nach innen gewölbt, wodurch ein Hohlspiegel gebildet ist. Dadurch können beispielsweise auf den Spiegel 12 fallende Empfangslichtstrahlen 9 durch den Spiegel 12 gebündelt bzw. fokussiert werden.

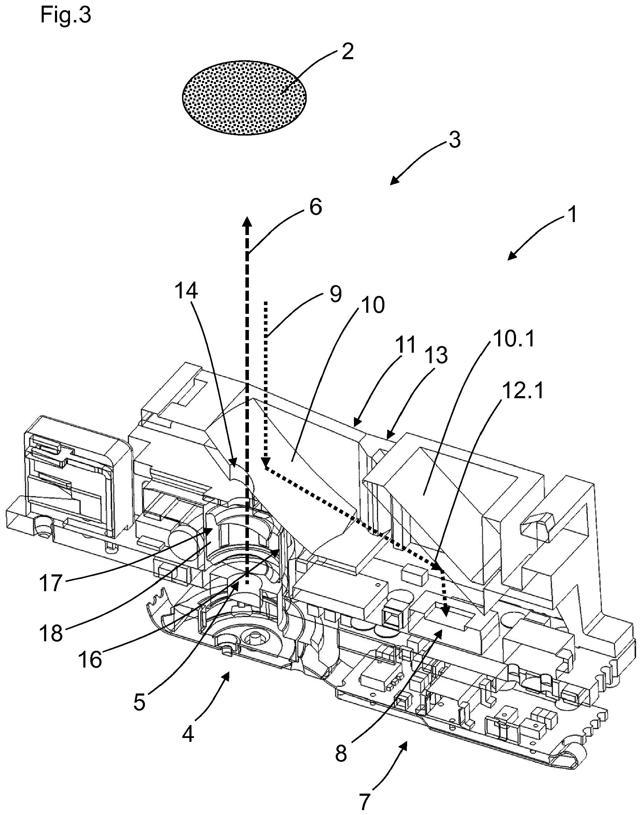

Gemäß Figur 3, welche eine Schnittdarstellung gemäß Figur 2 darstellt, ist ein zweiter Spiegel 12.1 des Spiegelelements 10.1 plan ausgebildet.

Gemäß Figur 3 sind die Spiegelelemente 10, 10.1 in einem Spiegelträger 13 angeordnet, wobei die Spiegelelemente 10, 10.1 und der Spiegelträger 13 einstückig ausgebildet sind und aus amorphem Metall 11 bestehen.

Der Spiegelträger 13 bildet beispielsweise einen Rahmen für die Spiegelelemente 10, 10.1, wodurch die Spiegelelemente 10, 10.1 mechanisch stabiler ausgeführt sind. Dadurch ist eine besonders einfache, robuste und stabile Ausführung gewährleistet.

Der Spiegelträger 13 gemäß Figur 2 weist beispielsweise zusätzliche Seitenwände 24 auf. Weiter dient der Spiegelträger 13 als Befestigungsbasis für weitere Sensorkomponenten. Beispielsweise kann an dem Spiegelträger 13 eine Anschlusseinheit 25 befestigt werden. Der Spiegelträger 13 weist beispielsweise Befestigungsaufnahmen für ein Sensorgehäuse auf. Weiter kann der Spiegelträger 13 Referenzflächen zur Positionierung anderer Sensorkomponenten aufweisen. Weiter kann der Spiegelträger 13 Referenzflächen aufweisen, um den Spiegelträger 13 und damit die Spiegelelemente 10, 10.1 selbst gegenüber einer anderen Referenzfläche genau zu positionieren, um eine exakte Ausrichtung der Spiegelelemente 10, 10.1 zu gewährleisten.

Gemäß Figur 2 weist der Spiegelträger 13 eine komplexe Struktur bzw. komplexe Oberfläche auf. Diese komplexe Struktur bzw. komplexe Oberfläche kann zur Befestigung dienen und kann an die Form anderer benachbarter Bauteile angepasst sein, so dass ein möglichst kompakter optoelektronischer Sensor 1 gebildet wird.

Gemäß Figur 3 sind mindestens zwei Spiegelelemente 10, 10.1 und der Spiegelträger 13 einstückig ausgebildet. Dadurch können beispielsweise empfangene Lichtstrahlen durch die nacheinander angeordneten Spiegelelemente 10, 10.1 zweifach abgelenkt werden, um diese beispielsweise einem Empfangselement zuzuführen. Hierbei sind die jeweiligen Spiegelelemente 10, 10.1 unterschiedlich ausgebildet. Beispielsweise ist ein erstes Spiegelelement 10 konkav ausgebildet und ein zweites Spiegelelement 10.1 plan ausgebildet.

Gemäß Figur 3 weist das Spiegelelement 10 eine Öffnung 14 für die Sendelichtstrahlen 6 auf. Dadurch kann beispielsweise in das Spiegelelement 10 für die Empfängereinheit 7 die Sendereinheit 4 mit dem Sendeelement 5 integriert werden. Insbesondere können die Sendelichtstrahlen 6 und die Empfangslichtstrahlen 9 kollimiert verlaufen. Bei der Öffnung 14 handelt es sich bevorzugt um eine runde Öffnung 14 bzw. ein Loch, welches beispielsweise nahe der Mitte oder mittig in dem Spiegelelement 10 angeordnet ist.

Gemäß Figur 2 ist das Spiegelelement 10 bzw. der Spiegelträger 13 mit einer Leiterplatte 15 mechanisch verbunden. Beispielsweise sind auf der Leiterplatte 15 alle elektronischen Komponenten angeordnet und an dem Spiegelträger 13 alle optischen Komponenten angeordnet. Dadurch wird durch die mechanische Verbindung des Spiegelträgers 13 mit der Leiterplatte 15 der optoelektronische Sensor 1 nahezu komplett aufgebaut. Lediglich ein optionaler elektrischer Anschluss und das Sensorgehäuse müssen noch ergänzt werden, um einen einsatzfähigen optoelektronischen Sensor 1 zu erhalten. Beispielsweise ist das Sendeelement 5 und/oder das Empfangselement 8 und eine Auswerteeinheit auf der Leiterplatte 15 angeordnet. Die Leiterplatte weist optional mindestens eine Referenzfläche auf, die mit mindestens einer optionalen Referenzfläche des Spiegelträgers 13 verbunden wird. Dadurch wird das Sendelement 5 und das Empfangselement 8 zu dem Spiegelelement 10 ausgerichtet und referenziert.

Gemäß Figur 3 weist der Spiegelträger 13 mindestens eine Aufnahme 16 für mindestens ein optisches Element 17 auf. Das optische Element 17 kann beispielsweise mindestens ein refraktives Element, beispielsweise mindestens eine Sammellinse 18 sein, Der Spiegelträger 13 weist wiederum Referenzflächen auf für das optische Element 17.

Gemäß Figur 2 weist der Spiegelträger 13 zusätzlich zu den Spiegelelementen 10, 10.1 mindestens eine Fläche 19 auf, die einstückig zu dem Spiegelträger 13 ausgebildet ist, um eine EMV-Schirmfläche 20 zu bilden. Beispielsweise können mehrere Flächen 19 vorgesehen sein, die die Elektronik der Leiterplatte 15 abschirmen, so dass die Elektronik der Leiterplatte 15 abgeschirmt wird, wodurch der optoelektronische Sensor 1 eine bessere elektromagnetische Verträglichkeit aufweist. Gemäß Figur 2 ist der Spiegelträger 13 bzw. die Spiegelelemente 10, 10.1 automatisiert auf einer Leiterplatte 15 bestückt.

### Bezugszeichen:

- 1: Optoelektronischer Sensor
- 2: Objekt
- 3: Überwachungsbereich
- 4: Sendereinheit
- 5: Sendeelement
- 6: Sendelichtstrahlen
- 7: Empfängereinheit
- 8: Empfangselement
- 9: Empfangslichtstrahlen
- 10, 10.1: Spiegelelement
- 11: amorphes Metall
- 12, 12.1: Spiegel
- 13: Spiegelträger
- 14: Öffnung
- 15: Leiterplatte
- 16: Aufnahme
- 17: optisches Element
- 18: Sammellinse
- 19: Fläche
- 20: EMV-Schirmfläche
- 21: Gehäuse
- 22: Frontscheibe
- 23: Anschluss
- 24: Seitenwände
- 25: Anschlusseinheit

## Patentansprüche

1. Optoelektronischer Sensor zur Erkennung von Objekten (2) innerhalb eines Überwachungsbereichs (3),
mit einer Sendereinheit (4) mit einem Sendeelement (5) zur Aussendung von Sendelichtstrahlen (6) in den Überwachungsbereich (3),
und/oder einer Empfängereinheit (7) mit einem Empfangselement (8) zum Empfang von Empfangslichtstrahlen (9) des Objektes (2),
wobei die Empfängereinheit (7) und/oder die Sendereinheit (4) mindestens eine Elektronikkarte und mindestens ein Spiegelelement (10) aufweist zur Umlenkung der Lichtstrahlen (6, 9)
wobei
das Spiegelelement (10) aus amorphem Metall (11) gebildet ist, **dadurch gekennzeichnet, dass** das Spiegelelement (10) mit einem definierten elektrischen Potential der Elektronikkarte verbunden ist, um die elektromagnetische Verträglichkeit des optoelektronischen Sensors zu verbessern.

2. Optoelektronischer Sensor nach Anspruch 1, **dadurch gekennzeichnet, dass** das amorphe Metall (11) eine amorphe Metalllegierung ist.

3. Optoelektronischer Sensor nach mindestens einem der vorhergehenden Ansprüche, **dadurch gekennzeichnet, dass** der Spiegel (12) des Spiegelelements (10) konkav gekrümmt ist.

4. Optoelektronischer Sensor nach mindestens einem der vorhergehenden Ansprüche, **dadurch gekennzeichnet, dass** der Spiegel (12) des Spiegelelements (10) plan ist.

5. Optoelektronischer Sensor nach mindestens einem der vorhergehenden Ansprüche, **dadurch gekennzeichnet, dass** das Spiegelelement (10) in einem Spiegelträger (13) angeordnet ist, wobei das Spiegelelement (10) und der Spiegelträger (13) einstückig ausgebildet sind und aus amorphem Metall (11) bestehen.

6. Optoelektronischer Sensor nach Anspruch 5, **dadurch gekennzeichnet, dass** mindestens zwei Spiegelelemente (10) und der Spiegelträger (13) einstückig ausgebildet sind.

7. Optoelektronischer Sensor nach mindestens einem der vorhergehenden Ansprüche, **dadurch gekennzeichnet, dass** mindestens ein Spiegelelement (10) eine Öffnung (14) für die Sendelichtstrahlen (6) aufweist.

8. Optoelektronischer Sensor nach mindestens einem der vorhergehenden Ansprüche 5 bis 7, **dadurch gekennzeichnet, dass** das Spiegelelement (10) oder der Spiegelträger (13) mit einer Leiterplatte (15) verbunden ist.

9. Optoelektronischer Sensor nach mindestens einem der vorhergehenden Ansprüche 5 bis 8, **dadurch gekennzeichnet, dass** der Spiegelträger (13) mindestens eine Aufnahme (16) für mindestens ein optisches Element (17) aufweist.

10. Optoelektronischer Sensor nach Anspruch 9, **dadurch gekennzeichnet, dass** das optische Element (17) eine Sammellinse (18) ist.

11. Optoelektronischer Sensor nach mindestens einem der vorhergehenden Ansprüche 5 bis 10, **dadurch gekennzeichnet, dass** der Spiegelträger (13) zusätzlich zu dem Spiegelelement (10) mindestens eine Fläche (19) aufweist, die einstückig zu dem Spiegelträger (13) ausgebildet ist, um eine EMV-Schirmfläche (20) zu bilden.

12. Optoelektronischer Sensor nach mindestens einem der vorhergehenden Ansprüche 7 bis 8, **dadurch gekennzeichnet, dass** das Spiegelelement (10) automatisiert auf einer Leiterplatte (15) bestückt ist.

## Claims

1. An optoelectronic sensor for recognizing objects (2) within a monitored zone (3),
comprising a transmitter unit (4) having a transmission element (5) for transmitting transmitted light beams (6) into the monitored zone (3); and/or a receiver unit (7) having a reception element (8) for receiving received light beams (9) of the object (2),
wherein the receiver unit (7) and/or the transmitter unit (4) has/have at least one electronic card and at least one mirror element (10) for deflecting the light beams (6, 9); and
wherein the mirror element (10) is formed from amorphous metal (11), **characterized in that**
the mirror element (10) is connected to a defined electrical potential of the electronic card to improve the electromagnetic compatibility of the optoelectronic sensor.

2. An optoelectronic sensor in accordance with claim 1, **characterized in that** the amorphous metal (11) is an amorphous metal alloy.

3. An optoelectronic sensor in accordance with at least one of the preceding claims, **characterized in that** the mirror (12) of the mirror element (10) is concavely curved.

4. An optoelectronic sensor in accordance with at least one of the preceding claims, **characterized in that** the mirror (12) of the mirror element (10) is planar.

5. An optoelectronic sensor in accordance with at least one of the preceding claims, **characterized in that** the mirror element (10) is arranged in a mirror carrier (13), with the mirror element (10) and the mirror carrier (13) being formed in one piece and comprising amorphous metal (11).

6. An optoelectronic sensor in accordance with claim 5, **characterized in that** at least two mirror elements (10) and the mirror carrier (13) are formed in one piece.

7. An optoelectronic sensor in accordance with at least one of the preceding claims, **characterized in that** at least one mirror element (10) has an opening for the transmitted light beams (6).

8. An optoelectronic sensor in accordance with at least one of the preceding claims 5 to 7, **characterized in that** the mirror element (10) or the mirror carrier (13) is connected to a circuit board (15).

9. An optoelectronic sensor in accordance with at least one of the preceding claims 5 to 8, **characterized in that** the mirror carrier (13) has at least one mount (16) for at least one optical element (17).

10. An optoelectronic sensor in accordance with claim 9, **characterized in that** the optical element (17) is a converging lens (18).

11. An optoelectronic sensor in accordance with at least one of the preceding claims 5 to 10, **characterized in that** the mirror carrier (13) has, in addition to the mirror element (10), at least one surface (19) that is formed in one piece with respect to the mirror carrier (!3) to form an EMC screen surface (20).

12. An optoelectronic sensor in accordance with at least one of the preceding claims 7 to 8, **characterized in that** the mirror element (10) is mounted on a circuit board in an automated manner.

## Revendications

1. Capteur optoélectronique pour reconnaître des objets (2) à l'intérieur d'une zone à surveiller (3), comportant une unité d'émission (4) pourvue d'un élément émetteur (5) pour émettre des rayons lumineux d'émission (6) dans la zone à surveiller (3), et/ou une unité de réception (7) pourvue d'un élément récepteur (8) pour recevoir des rayons lumineux de réception (9) de l'objet (2), dans lequel l'unité de réception (7) et/ou l'unité d'émission (4) comprend au moins une carte électronique et au moins un élément miroir (10) pour dévier les rayons lumineux (6, 9), l'élément miroir (10) est constitué en métal amorphe (11), **caractérisé en ce que** l'élément miroir (10) est connecté à un potentiel électrique défini de la carte électronique pour améliorer la compatibilité électromagnétique du capteur optoélectronique.

2. Capteur optoélectronique selon la revendication 1, **caractérisé en ce que** le métal amorphe (11) est un alliage de métal amorphe.

3. Capteur optoélectronique selon l'une au moins des revendications précédentes, **caractérisé en ce que** le miroir (12) de l'élément miroir (10) est recourbé concave.

4. Capteur optoélectronique selon l'une au moins des revendications précédentes, **caractérisé en ce que** le miroir (12) de l'élément miroir (10) est plan.

5. Capteur optoélectronique selon l'une au moins des revendications précédentes, **caractérisé en ce que** l'élément miroir (10) est agencé dans un porte-miroir (13), l'élément miroir (10) et le porte-miroir (13) étant réalisés d'un seul tenant et étant constitués en métal amorphe (11).

6. Capteur optoélectronique selon la revendication 5, **caractérisé en ce qu'**au moins deux éléments miroirs (10) et le porte-miroir (13) sont réalisés d'un seul tenant.

7. Capteur optoélectronique selon l'une au moins des revendications précédentes, **caractérisé en ce qu'**au moins un élément miroir (10) présente une ouverture (14) pour les rayons lumineux d'émission (6).

8. Capteur optoélectronique selon l'une au moins des revendications précédentes 5 à 7, **caractérisé en ce que** l'élément miroir (10) ou le porte-miroir (13) est connecté à une carte à circuits (15).

9. Capteur optoélectronique selon l'une au moins des revendications précédentes 5 à 8, **caractérisé en ce que** le porte-miroir (13) présente au moins un logement (16) pour au moins un élément optique (17).

10. Capteur optoélectronique selon la revendication 9, **caractérisé en ce que** l'élément optique (17) est une lentille convergente (18).

11. Capteur optoélectronique selon l'une au moins des revendications précédentes 5 à 10, **caractérisé en ce que** le porte-miroir (13) présente, en supplément à l'élément miroir (10), au moins une surface (19) qui est réalisée d'un seul tenant avec le porte-miroir (13) pour former une surface de blindage CEM (20).

12. Capteur optoélectronique selon l'une au moins des revendications précédentes 7 à 8, **caractérisé en ce que** l'élément miroir (10) est monté de façon automatisée sur une carte à circuits (15).
